# EUROPÄISCHE PATENTSCHRIFT

(11) **EP 1 438 998 B1**
(45) Veröffentlichungstag und Bekanntmachung des Hinweises auf die Patenterteilung: **28.11.2007**
(21) Anmeldenummer: 03104941.4
(22) Anmeldetag: 23.12.2003
(51) Int. Cl.: B01D 29/01, B01D 35/30

(54) **Filtervorrichtung zur Filterung eines Fluides**
Filter device for filtering a fluid
Dispositif de filtration pour filtrer un fluide

(30) Priorität: 16.01.2003 DE 10301353
(43) Veröffentlichungstag der Anmeldung: 21.07.2004
(73) Patentinhaber: MANN+HUMMEL GmbH, 71638 Ludwigsburg (DE)
(72) Erfinder: Cedzich, Wolfgang, 71686, Remseck (DE); Spennemann, Alrun, 70469, Stuttgart (DE)
(74) Vertreter: Voth, Gerhard

(56) Entgegenhaltungen:
- WO-A-00/13763
- DE-A- 10 058 251
- DE-A- 19 860 357

## Beschreibung

### Stand der Technik

Die Erfindung bezieht sich auf eine Vorrichtung zur Filterung eines Fluides, insbesondere einen Getriebeölfilter, nach dem Oberbegriff des Anspruchs 1. Ferner bezieht sich die Erfindung auf ein Verfahren zur Verbindung von Gehäuseteilen nach dem Oberbegriff des nebengeordneten Anspruches 7.

Bekannte Getriebeölfilter werden häufig aus zwei Gehäusehalbschalen mit unterschiedlichem Material hergestellt. Hierzu wird das Filtermedium, welches meistens ein Kunststoffvlies ist, per Ultraschallschweißverfahren dichtend in eine der beiden Gehäusehalbschalen, welche aus Kunststoff ist, eingeschweißt. Anschließend wird die Kunststoffgehäusehalbschale mit einer zweiten Blechgehäusehalbschale verbördelt. Hierbei ergeben sich oft mehrere Probleme. Die Herstellung des Gehäuses aus zwei unterschiedlichen Materialien bedingt einen teureren weil mehrschrittigen Herstellungsprozess und beinhaltet eine schlechtere Rezykliermöglichkeit. Weiterhin kommt es beim Ultraschallschweißverfahren des öfteren zu einer Beschädigung des Filtermediums, welches zu einer sehr hohen Ausschussrate führt.

Eine gängige Weiterentwicklung dieser Getriebeölfilter beinhaltet die Ausführung der zweiten Gehäusehalbschale aus Kunststoff und die Verbindung der beiden Gehäusehalbschalen im Vibrationsschweißverfahren. Auch hier ergibt sich der Nachteil der häufigeren Verletzung des Filtermediums und als weiterer Nachteil die speziell auf das Vibrationschweißverfahren auszulegende Fügekontur.

Die DE 198 60 357 A1 beschreibt einen Getriebeölfilter mit zwei Gehäusehalbschalen aus Kunststoff, welche über das Laserstrahlschweißen miteinander verbunden werden. Dabei ist eine Gehäusehalbschale aus laserlichtdurchlässigem Kunststoff und die andere Gehäusehalbschale aus laserlichtundurchlässigem Kunststoff vorgesehen. Der Laserstrahl durchdringt die laserlichtdurchlässige Gehäusehalbschale, wird von der laserlichtundurchlässigen Gehäusehalbschale absorbiert und verschmilzt dadurch die beiden Gehäusehalbschalen in der Fügezone. Das Filtermedium wird hierbei zwischen die Filterhalbschalen eingelegt und mittels einer Klemmrippe zwischen den beiden Filterhalbschalen festgehalten. Jedoch ist kein Verschmelzen des Filtermediums mit wenigstens einer der beiden Gehäusehalbschalen vorgesehen. Hier ergibt sich der Nachteil, dass das Filtermedium durch z. B. eine erhöhte Belastung im Betrieb oder Toleranzen des Zuschnitts ein nicht hundertprozentiges Einlegen zwischen die Gehäusehalbschalen sich aus der Nut lösen kann oder sogar gar nicht von ihr erfasst wird und dadurch die Dichtwirkung zwischen Roh- und Reinseite nicht mehr gegeben ist.

Aufgabe der Erfindung ist es daher, eine gattungsgemäße Vorrichtung zur Filterung eines Fluides derart weiterzubilden, dass unter allen Betriebsbedingungen die Lage des Filtermediums zwischen den Gehäusehälften funktionsentsprechend gewährleistet bleibt. Ebenso ist es als Aufgabe anzusehen, ein Verfahren zur Verbindung von Gehäuseteilen bereitzustellen. Diese Aufgaben werden durch die Merkmale des Patentanspruchs 1 und 7 gelöst.

### Vorteile der Erfindung

Die erfindungsgemäße Vorrichtung, welche insbesondere als Getriebeölfilter eingesetzt werden kann, weist wenigstens zwei Gehäuseteile, die an einer gemeinsamen Fügezone getrennt sind, auf, wobei die Gehäuseteile wenigstens einen Einlass und einen Auslass besitzen und diese durch ein Filtermedium, insbesondere ein Filtervlies voneinander getrennt sind. Das Filtermedium ist zwischen den Gehäuseteilen angeordnet und trennt die beiden Gehäuseteile in der Fügezone voneinander. Dieses Filtermedium kann einteilig oder zweiteilig ausgeführt sein, wobei es in der zweiteiligen Ausführung als sog. Filtersack dient. Das Filtermedium kann in dieser Filtervorrichtung als Vlies, welches aus Stoff oder aus Kunststoff ausgeführt ist, aber auch als Metallsieb ausgeführt sein. Erfindungsgemäß sind die Gehäuseteile für Laserlicht im wesentlichen transparent und das Filtermedium für das Laserlicht im wesentlichen absorbierend ausgeführt. Durch diese Voraussetzungen werden die Gehäuseteile mittels des dazwischen angeordneten Filtermediums über das Laserstrahlschweißverfahren dichtend miteinander verbunden. Auf diese Art und Weise erhält man einen Fluidfilter, bei dem das Filtermedium eindeutig positioniert und fixiert ist. Diese Art von Filtern können so in allen Gebieten der Technik eingesetzt werden, wo es darum geht, einen Fluidfilter einzusetzen, welcher leicht, günstig in der Herstellung ist und auch unter schwierigen Betriebsbedingungen, wie z. B. eine hohe Druckdifferenz zwischen Ein- und Auslass, betriebssicher anzuwenden ist. Als Beispiele seien hier auch Getriebeölfilter für Automatikgetriebe oder Kraftstofffilter genannt.

In einer Ausgestaltung der Erfindung handelt es sich bei dem Filtermedium um ein Polymervlies. Speziell ist in einer weiteren Ausgestaltung der Erfindung angedacht, dieses Polymer auf der Basis von Polyestern darzustellen.

Zur besseren Stabilisierung und Erhöhung der Absorptionswirkung ist das Filtermedium in einer weiteren Variante mit Phenolharz getränkt.

Allerdings ist es ebenso in einer weiteren Ausgestaltung möglich, das Filtermedium aus einem Metallsieb zu gestalten. Dieses Metallsieb kann als flexible Metallfolie mit integrierten Feinstöffnungen zur effektiven Filterung eines Fluids ausgestaltet sein.

Es ist vorteilhaft, die Gehäuseteile aus einem thermoplastischen Material herzustellen, welches für das Spektrum des Laserlichts transparent ist. Auf diese Art und Weise lassen sich die Gehäuseteile einfach mit einer Standard-Spritzgießmaschine herstellen und sind so bezüglich der Formgebung sehr flexibel zu handhaben.

Das erfindungsgemäße Verfahren ist durch mehrere Schritte gekennzeichnet. Im ersten Schritt wird ein Filtermedium auf eine im wesentlichen plane Fügezone eines Gehäuseteiles aufgelegt und darauf ausgerichtet. Die Fügezone befindet sich im äußeren Randbereich des ersten Gehäuseteiles und weist bevorzugt eine ebene plane Fläche auf, auf die das Filtermedium in dessen Randbereich aufgelegt wird. Es ist allerdings nicht ausgeschlossen, auch Gehäuseteile zu verbinden, bei denen die Fügezone in ihrer axialen Ausrichtung nicht plan und eben ist, sondern eine z. B. gebogene Form aufweisen kann. Das aufzulegende Filtermedium kann hierbei aus einem getränkten Stoff, aus einem Polymervlies oder auch aus mit Durchgangsporen versehener Metallfolie bestehen. Im nächsten Schritt wird ein zweites Gehäuseteil mit einer zum ersten Gehäuseteil korrespondierenden im wesentlichen planen Fügezone auf das Filtermedium gelegt und beide Gehäuseteile werden aufeinander gepresst. Auf diese Art und Weise wird das Filtermedium zwischen den beiden Gehäuseteilen fixiert und ein Verrutschen des Filtermediums ist bis zum endgültigen Schweißvorgang ausgeschlossen. Der so zusammengepresste Fluidfilter wird daraufhin in eine Laserstrahlschweißvorrichtung eingelegt, wobei im Anschluss das erste Gehäuseteil mit einem Laserstrahl durchstrahlt wird. Hierzu sind die Gehäuseteile auf einem für Laserstrahlen transparentem Kunststoff, wobei bevorzugt teilkristalline Thermoplaste, z. B. PA 6, PA 6.6, PBT, PP, PE etc. zum Einsatz kommen. So durchdringt der Laserstrahl möglichst reflexionsfrei das für ihn transparente Gehäuseoberteil, dringt in der Fügezone, d. h. in dem Kontaktbereich, in dem die Fügeteile aufgeschmolzen werden, in das Filtermedium ein, wird dort absorbiert und schmilzt dadurch absorbiert und schmilzt dadurch den Kunststoff in der Fügezone auf. Hierdurch verbinden sich das erste Gehäuseteil und das Filtermedium dichtend miteinander. Daraufhin wird der immer noch zusammengepresste Fluidfilter gedreht und das zweite Gehäuseteil mit gleichen optischen Eigenschaften wird auf die selbe Art und Weise mit dem Filtermedium und dem damit verbundenen ersten Gehäuseteil verbunden. Das eingebrachte Filtermedium kann einschichtig oder als Tasche ausgebildet sein, wobei in dieser Ausbildung eine im Inneren der Tasche liegende Rohseite von einer im Inneren des Gehäuses, aber au-ßerhalb der Filtertasche liegenden Reinseite abgetrennt wird. Für die Verbindung durch die Schmelze zwischen den Gehäuseteilen über das Filtermedium gibt es in Abhängigkeit des Materials des Filtermediums zwei verschiedene Möglichkeiten. Bei einem polymeren Filtermedium entsteht die Schmelze im Filtermedium und verkrallt sich so mit den ebenfalls polymeren Gehäuseteilen. Liegen jedoch die Schmelzpunkte des polymeren Filtermediums und der Gehäuseteile sehr weit auseinander, wobei die Gehäuseteile den niedrigeren Schmelzpunkt haben, absorbiert das Filtermedium den Laserstrahl, wird durch die Energieeinbringung aufgeheizt und bringt die Gehäuseteile in dem Bereich der Fügezone zum Aufschmelzen, wobei die Schmelze dann das Filtermedium durchdringt und sich innig und dichtend mit diesem verbindet. Beispielhaft sei hier ein teilaromatisches Vlies wie Aramid, ein aromatisches PA mit einer Schmelztemperatur von ca. 260 - 280 °C zwischen Gehäusehälften aus PA 6 mit einer Schmelztemperatur von 220 - 230 °C genannt. Wird als Filtermedium eine Metallfolie gewählt, so werden ebenfalls die Gehäuseteile durch die bei der Absorption sich bildende Hitze in der Metallfolie im Bereich der Fügezone angeschmolzen. Nach dem Abkühlen erhält man so einen kostengünstig und einfach hergestellten Fluidfilter, wobei das Filtermedium sicher und dichtend zwischen den Gehäuseteilen befestigt ist.

In einer vorteilhaften Anwendung des Verfahrens verkrallt sich das Filtermedium nach dem Aufschmelzen während der Abkühlphase mit der Fügezone. Dies sorgt für eine besonders innige und dichte Verbindung zwischen Filtermedium und Gehäuseteil.

Eine weitere Variante des Verfahrens ist dadurch gekennzeichnet, dass die Schmelzebildung im absorbierenden Filtermedium, sprich im Polymervlies, stattfindet. Durch die Absorption des Laserstrahls und die dadurch eingebrachte Energie in das Filtermedium geht dieses in einen schmelzförmigen Zustand über und verbindet sich so mit den Gehäuseteilen. Hier ist es vorteilhaft, das Vlies thermoplastisch zu tränken, um zu einer größeren Schmelzbildung zu gelangen.

Eine zusätzliche Variante des Verfahrens ist dadurch gekennzeichnet, dass die Schmelzbildung im jeweiligen Gehäuse stattfindet und dass die dafür notwendige Temperatur durch die Absorption des Laserstrahls im Filtermedium entsteht. Durch die Energieeinbringung durch die Absorption im Filtermedium heizt sich das Filtermedium entsprechend auf und kann so bei entsprechender Wahl des Schmelzpunkts der Gehäuseteile diese aufschmelzen und dadurch die Verbindung zwischen Filtermedium und Gehäuseteil herstellen. Eine beispielhafte Materialpaarung ist weiter oben erwähnt worden.

Eine besondere Ausführungsform des Verfahrens sieht vor, das es sich bei dem Filtermedium um ein Polymervlies auf der Basis von Polyestern handelt. Es ist weiterhin vorteilhaft, dieses Filtermedium mit Phenolharz zu tränken. Hierdurch wird eine Versprödung des Filtermaterials vermieden und die Absorptionsfähigkeit erhöht.

Eine weitere Ausführungsform zeichnet sich wie oben dargelegt dadurch aus, dass das Filtermedium aus einem Metallsieb besteht.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt die einzige Figur
den erfindungsgemäßen Fluidfilter unter Anwendung des erfindungsgemäßen Verfahrens.

### Beschreibung der Ausführungsbeispiele

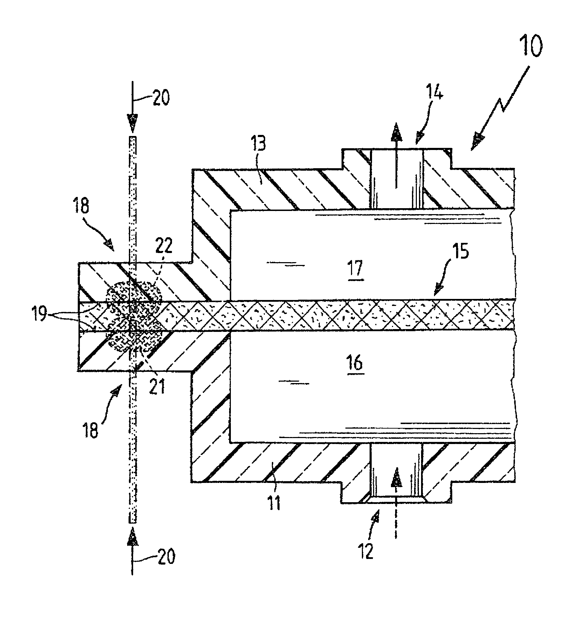

Die Figur 1 zeigt schematisch einen Teil des erfindungsgemäßen Fluidfilters 10 und das Verfahren zum Fügen der einzelnen Komponenten. Der Fluidfilter 10 besteht aus einem Gehäuseunterteil 11 mit einem Einlass 12, einem Gehäuseoberteil 13 mit einem Auslass 14 und einem dazwischen angeordnetem Filtermedium, hier ein Polymervlies 15. Das Filtervlies 15 trennt innerhalb der Filtervorrichtung 10 eine Rohseite 16 von einer Reinseite 17. Der Fluidfilter 10 weist einen umlaufenden Randbereich 18 auf, in dem sich die Fügezone 19 befindet. Im ersten Teil des Verfahrens wird das Filtervlies 15 zwischen die Gehäuseteile 11 und 13 gelegt und beide Gehäuseteile werden zur Fixierung des Vlieses 15 zusammengepresst. Im nächsten Schritt durchdringt ein Laserstrahl 20 das untere, transparente Gehäuseteil 11 und wird von dem Filtervlies 15 absorbiert. Dabei entsteht im Bereich der Fügezone 19 eine Schmelze 21, welche das Filtervlies teilweise durchdringt und für eine Verkrallung zwischen Gehäuseunterteil 11 und Filtervlies 15 sorgt. Anschließend wird über eine Drehung der Laserquelle das Laserlicht 20 durch das für das Laserlicht 20 transparente obere Filtergehäuse 13 gelenkt und wiederum im Filtervlies 15 absorbiert. Hier kommt es im Bereich der Fügezone 19 zu einer Schmelzebildung 22, wobei die Schmelze 22 wieder einen Teil des Filtervlieses 15 durchdringt und so für eine feste Verbindung zwischen Filtervlies 15 und Gehäuseoberteil 13 sorgt. Bei einer entsprechend wenigstens annähernd symmetrischen Auslegung des Fluidfilters 10 ist es auch möglich, die Gehäuseteile 11 und 13 gleichzeitig mit dem Filtervlies 15 zu verschweißen, indem die Laserstrahleinwirkung gleichzeitig von beiden Seiten geschieht. Hier müssen die Prozessparameter derart eingestellt werden, dass eine Beschädigung, wie z. B. ein Durchschweißen des Filtervlieses 15 , welches zu einer Lochbildung führt, vermieden wird. Die innige Verbindung zwischen Filtervlies 15 und den Gehäuseteilen 11 und 13 geschieht dann bei der Abkühlung der Schmelze 21, 22 und der damit verbundenen Aushärtung und Replastifizierung der Schmelze 21, 22.

Auf die oben gezeigte Art und Weise kann somit unter Verwendung nur einer einzigen Laserschweißvorrichtung der erfindungsgemäße Fluidfilter mit einfachen Mitteln hergestellt werden.

## Patentansprüche

1. Vorrichtung zur Filterung eines Fluides, insbesondere ein Getriebeölfilter, mit wenigstens zwei Gehäuseteilen, mit wenigstens einem Einlass und wenigstens einem Auslass, wobei Einlass und Auslass durch ein Filtermedium, insbesondere ein Filtervlies, getrennt werden, wobei die Gehäuseteile über Laserstrahlschweißen miteinander dichtend verbunden werden, **dadurch gekennzeichnet, dass** die Gehäuseteile für den Laserstrahl im wesentlichen transparent und das Filtermedium für den Laserstrahl im wesentlichen absorbierend ausgeführt sind und zwischen den Gehäuseteilen an deren Fügezone der äußere Rand des Filtermediums angeordnet ist.

2. Filtervorrichtung nach Anspruch 1, **dadurch gekennzeichnet, dass** es sich bei dem Filtermedium um ein Polymervlies handelt.

3. Filtervorrichtung nach Anspruch 2, **dadurch gekennzeichnet, dass** es sich bei dem Filtermedium um ein Polymer auf der Basis von Polyestern handelt.

4. Filtervorrichtung nach einem der vorhergehenden Ansprüche, **dadurch gekennzeichnet, dass** das Filtermedium mit Phenolharz getränkt ist.

5. Filtervorrichtung nach einem der vorhergehenden Ansprüche, **dadurch gekennzeichnet, dass** das Filtermedium ein Metallsieb ist.

6. Filtervorrichtung nach einem der vorhergehenden Ansprüche, **dadurch gekennzeichnet, dass** die Gehäuseteile aus einem thermoplastischen Material bestehen, welches IR-transparent ist.

7. Verfahren zum Verbinden von Gehäuseteilen, die für einen Laserstrahl im wesentlichen transparent sind, einer Filtervorrichtung insbesondere eines Getriebeölfilters mittels eines Filtermediums, das für den Laserstrahl im wesentlichen absorbierend ist, umfassend folgende Schritte:
• Auflegen und Ausrichten des Filtermediums auf eine im wesentlichen plane Fügezone eines ersten Gehäuseteiles,
• Auflegen eines zweiten Gehäuseteils mit einer korrespondierenden im wesentlichen planen Fügezone und Aufeinanderpressen der Gehäuseteile,
• Bestrahlen des ersten Gehäuseteiles mit einem Laserstrahl, wobei der Laserstrahl im Filtermedium absorbiert wird, **dadurch** Schmelzeentwicklung in der Fügezone des ersten Gehäuseteils eintritt und das Filtermediums mit der Schmelze durchdrungen wird;
• Bestrahlen des zweiten Gehäuseteils mit dem Laserstrahl, wobei der Laserstrahl im Filtermedium absorbiert wird, **dadurch** Schmelzeentwicklung in der Fügezone des zweiten Gehäuseteils eintritt und das Filtermediums mit der Schmelze durchdrungen wird.; und
• einen Abkühlschritt.

8. Verfahren nach Anspruch 7, **dadurch gekennzeichnet, dass** sich das Filtermedium nach dem Aufschmelzen der Fügezone beim Abkühlen mit dieser verkrallt.

9. Verfahren nach einem der Ansprüche 7 bis 8, **dadurch gekennzeichnet, dass** die Schmelzebildung im jeweiligen Gehäuseteil stattfindet und dass die dafür notwendige Temperatur durch die Absorption im Filtermedium entsteht

10. Verfahren nach einem der vorhergehenden Ansprüche 7 bis 9, **dadurch gekennzeichnet, dass** es sich bei dem Filtermedium um ein Polymer auf der Basis von Polyestern handelt.

11. Verfahren nach einem der vorhergehenden Ansprüche 7 bis 10, **dadurch gekennzeichnet, dass das** Filtermedium mit Phenolharz getränkt ist

12. Verfahren nach einem der vorhergehenden Ansprüche 7 bis 11, **dadurch gekennzeichnet, dass** das Filtermedium ein Metallsieb ist.

13. Verfahren nach einem der vorhergehenden Ansprüche 7 bis 12, **dadurch gekennzeichnet, dass** die Gehäuseteile aus einem thermoplastischen Material bestehen, welches IR-transparent ist.

## Claims

1. Apparatus for filtering a fluid, more especially a gear oil filter, the said apparatus having at least two housing parts, with at least one inlet and at least one outlet, wherein inlet and outlet are separated by a filtering medium, more especially a non-woven filter fabric, wherein the housing parts are interconnected in a sealing manner by means of laser beam welding, **characterised in that** the housing parts are substantially transparent to the laser beam and the filtering medium is substantially absorbent to the laser beam and the outside edge of the filtering medium is disposed between the housing parts at their bonding zone.

2. Filter apparatus according to claim 1, **characterised in that** the filtering medium is a non woven polymer fabric.

3. Filter apparatus according to claim 2, **characterised in that** the filtering medium is a polymer with a polyester base.

4. Filter apparatus according to one of the preceding claims, **characterised in that** the filtering medium is saturated with phenolic resin.

5. Filter apparatus according to one of the preceding claims, **characterised in that** the filtering medium is a metal sieve.

6. Filter apparatus according to one of the preceding claims, **characterised in that** the housing parts are made from a thermoplastics material, which is transparent to infrared.

7. Method of joining housing parts, which are substantially transparent to a laser beam, a filtering apparatus, more especially a gear oil filter by means of a filtering medium, which is substantially absorbent to the laser beam, including the following steps:
• placing and aligning the filtering medium on a substantially plane bonding zone of a first housing part,
• placing a second housing part with a correspondingly substantially plane bonding zone thereon and pressing the housing parts together,
• irradiating the first housing part with a laser beam, wherein the laser beam is absorbed in the filtering medium, molten material thereby occurring in the bonding zone of the first housing part and the filtering medium being penetrated by the molten material;
• irradiating the second housing part with the laser beam, wherein the laser beam is absorbed in the filtering medium, molten material thereby occurring in the bonding zone of the second housing part and the filtering medium being penetrated by the molten material; and
• cooling.

8. Method according to claim 7, **characterised in that**, after the melting of the bonding zone, the filtering medium becomes one with the said bonding zone during cooling.

9. Method according to one of claims 7 to 8, **characterised in that** the formation of the molten material takes place in the respective housing part and **in that** the temperature necessary for this is created through the absorption in the filtering medium.

10. Method according to one of the preceding claims 7 to 9, **characterised in that** the filtering medium is a polymer with a polyester base.

11. Method according to one of the preceding claims 7 to 10, **characterised in that** the filtering medium is saturated with phenolic resin.

12. Method according to one of the preceding claims 7 to 11, **characterised in that** the filtering medium is a metal sieve.

13. Method according to one of the preceding claims 7 to 12, **characterised in that** the housing parts are made of thermoplastics material, which is transparent to infrared.

## Revendications

1. Dispositif de filtrage d'un fluide, en particulier filtre à huile pour boîtes de vitesses, comprenant au moins deux parties de boîtier comportant au moins une entrée et au moins une sortie, l'entrée et la sortie étant séparées par un élément filtrant, en particulier un non-tissé filtrant, et les parties de boîtier étant reliées l'une à l'autre de façon étanche par soudage au laser,
**caractérisé en ce que**
les parties de boîtier sont en grande partie transparentes au rayon laser, l'élément filtrant est conçu pour absorber en grande partie le rayon laser, et on dispose entre les parties de boîtier, au niveau de leur zone d'assemblage, le bord extérieur de l'élément filtrant.

2. Dispositif de filtration selon la revendication 1, **caractérisé en ce que** l'élément filtrant est un non-tissé polymère.

3. Dispositif de filtration selon la revendication 2, **caractérisé en ce que** l'élément filtrant est un polymère à base de polyesters.

4. Dispositif de filtration selon l'une quelconque des revendications précédentes, **caractérisé en ce que** l'élément filtrant est imbibé de résine phénolique.

5. Dispositif de filtration selon l'une quelconque des revendications précédentes, **caractérisé en ce que** l'élément filtrant est un tamis métallique.

6. Dispositif de filtration selon l'une quelconque des revendications précédentes, **caractérisé en ce que** les parties de boîtier sont composées de matériau thermoplastique transparent aux IR.

7. Procédé d'assemblage de parties de boîtier en grande partie transparentes à un rayon laser, d'un dispositif de filtrage, en particulier d'un filtre à huile pour boîtes de vitesses, au moyen d'un élément filtrant qui absorbe en grande partie le rayon laser, comprenant les étapes suivantes:
- mise en place et ajustage de l'élément filtrant sur une zone d'assemblage en grande partie plane de la première partie de boîtier,
- mise en place d'une deuxième moitié de boîtier avec une zone d'assemblage en grande partie plane correspondante et compression des parties de boîtier,
- exposition de la première partie de boîtier à un rayon laser, sachant que le rayon laser est absorbé dans l'élément filtrant, qu'une masse fondue se développe alors dans la zone d'assemblage de la première partie de boîtier et que l'élément filtrant est traversé par la masse fondue,
- exposition de la deuxième partie de boîtier au rayon laser, sachant que le rayon laser est absorbé dans l'élément filtrant, qu'une masse fondue se développe alors dans la zone d'assemblage de la deuxième partie de boîtier et que l'élément filtrant est traversé par la masse fondue, et
- une étape de refroidissement.

8. Procédé selon la revendication 7, **caractérisé en ce que** l'élément filtrant se cramponne avec la zone d'assemblage lors du refroidissement après la fusion de celle-ci.

9. Procédé selon l'une quelconque des revendications 7 à 8, **caractérisé en ce que** la formation de masse fondue se produit dans la partie de boîtier respective et la température nécessaire à cet effet s'établit par l'absorption dans l'élément filtrant.

10. Procédé selon l'une quelconque des revendications 7 à 9, **caractérisé en ce que** l'élément filtrant est un polymère à base de polyesters.

11. Procédé selon l'une quelconque des revendications 7 à 10, **caractérisé en ce que** l'élément filtrant est imbibé de résine phénolique.

12. Procédé selon l'une quelconque des revendications 7 à 11, **caractérisé en ce que** l'élément filtrant est un tamis métallique.

13. Procédé selon l'une quelconque des revendications 7 à 12, **caractérisé en ce que** les parties de boîtier sont composées d'un matériau thermoplastique transparent aux IR.
